# EUROPEAN PATENT SPECIFICATION

(11) **EP 4 384 999 B1**
(45) Date of publication and mention of the grant of the patent: **27.05.2026**
(21) Application number: 22856473.8
(22) Date of filing: 08.08.2022
(51) Int. Cl.: G06Q 10/02, G06Q 30/0645, G08G 1/00, G06F 16/951, G06Q 50/40

(54) **FILTERING VEHICLE SEARCH RESULTS FOR AN UPCOMING TRIP**
FILTERUNG VON FAHRZEUGSUCHERGEBNISSEN FÜR BEVORSTEHENDE FAHRTEN
FILTRAGE DE RÉSULTATS DE RECHERCHE DE VÉHICULE POUR UN VOYAGE À VENIR

(30) Priority: 09.08.2021 US 202117396978
(43) Date of publication of application: 19.06.2024
(73) Proprietor: Turo Inc., San Francisco, California 94104 (US)
(72) Inventor: JONCQUEZ, Thibaut, San Francisco, California (US); MARINAKI, Maria, San Francisco, California (US); RAYAPATI, Prabhat, San Francisco, California (US); SAMPATH, Sai Kannan, San Francisco, California (US); ROUCAU, Hugo Lucien, San Francisco, California (US); DESAI, Vidushi Gaurangkumar, San Jose, California (US)
(74) Representative: Müller-Boré & Partner Patentanwälte PartG mbB
(86) International application number: PCT/US2022/039710
(87) International publication number: WO 2023/018655

(56) References cited:
- US-A1- 2010 106 534
- US-A1- 2013 321 178
- US-A1- 2013 321 178
- US-A1- 2019 205 797
- US-A1- 2019 287 202
- US-B1- 11 436 239

## Description

### RELATED APPLICATION

This application claims the benefit of U.S. Non-Provisional Patent Application No. 17/396,978, filed August 9, 2021, and titled "Filtering Vehicle Search Results for an Upcoming Trip,".

### BACKGROUND

The Internet contains a vast amount of information. Locating a desired portion of the information, however, can be challenging. Search engines attempt to return content in which a user is interested. Generally, search engines base their determination of the user's interest on search terms (called a search query) entered by the user. The goal of the search engine is to provide high quality, relevant results to the user based on the search query. Typically, the search engine accomplishes this by matching the terms in the search query to content indexed by crawlers, a corpus of pre-stored content, or by using other relevant data, such as user account information.

Online searches for property, such as rental properties, homes, and vehicles, are increasingly becoming more diverse and common with the advance of online marketplaces for property. Many such services enable individual users to make their property available in the role of a "host." Those services provide systems that enable users to host property to rent or share that guests may, via conventional search query and search result processes, search for, find, reserve, and access.

Sometimes, these online transactions result in adverse outcomes. For example, a listed property may become damaged, involved in criminal activity, converted or stolen, and so forth. Additional examples of adverse outcomes include incidental costs incurred, such as toll fees, parking tickets, speeding tickets, damaged goodwill, and more. Conventional search query and search result techniques do not account for adverse outcomes when returning search results.

US 2013 321 178 A1 describes techniques and structures relating to rental of vehicles, which may be owned by different owners. Each owner may have his or her own set of rental criteria associated with a particular vehicle, which prospective renters may have to meet to be able to rent the particular vehicle. Vehicles may be determined to be for rent based on a distance to a renter, price, and other factors. Messages and alerts may be exchanged between a server and an owner, renter, and/or vehicle computing device. Location information about vehicles is collected and may be associated with particular drivers. Historical information and other data may be used to predict driver destinations. Targeted advertisements may be sent to renters based on predicted destinations, demographic information, or other information. In some embodiments, targeted advertisements are based on social networking website data. Vehicles may also be remotely located through the use of a horn and/or lights.

### SUMMARY

Techniques for filtering vehicle search results for an upcoming trip are described that overcome the challenges of conventional techniques of search query and search result processes, thus preventing adverse outcomes and extending the host base for vehicle access platforms.

In one example, a vehicle access platform receives a search query from a client device to view vehicles for an upcoming trip. The vehicle access platform identifies information about the upcoming trip, such as user information, vehicle information, and trip information. Based on the information about the upcoming trip, the vehicle access platform determines available vehicles for the upcoming trip. Further, the vehicle access platform predicts an outcome based on the information, using as least one of the user information, the vehicle information, or the trip information. Based on the outcome predicted, the vehicle access platform prevents one or more of the available vehicles from being returned as search results. In this manner, the vehicle access platform controls access to the upcoming trip by returning to a client device filtered search results for a subset of the available vehicles, such that the filtered search results do not include the available vehicles which are prevented from being returned. These filtered search results may be displayed via a user interface of the client device of a guest user.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures may be indicative of one or more entities and thus reference may be made interchangeably to single or plural forms of the entities in the discussion. The appended drawings illustrate, by way of example and not of limitation, various embodiments of systems, methods, and computer program products implementing the inventive subject matter.
FIG. 1 is an illustration of an environment in an example implementation that is operable to employ techniques described herein.
FIG. 2 depicts a system in an example implementation showing operation of a vehicle access platform of FIG. 1 in greater detail as controlling access to available vehicles for an upcoming trip by filtering search results for the upcoming trip.
FIG. 3 depicts an example implementation of a user interface displaying unfiltered search results received from the vehicle access platform that include the available vehicles.
FIG. 4 depicts an example implementation of the user interface displaying filtered search results received from the vehicle access platform, where the filtered search results include a subset of the available vehicles that does not include available vehicles prevented from being returned.
FIG. 5 depicts another example implementation of the user interface displaying filtered search results received from the vehicle access platform, where the filtered search results include a subset of the available vehicles that does not include available vehicles prevented from being returned.
FIG. 6 depicts a procedure in an example implementation in which access to available vehicles for an upcoming trip is controlled by a vehicle access platform by returning to a client device filtered search results for a subset of available vehicles that does not include available vehicles prevented from being returned.
FIG. 7 illustrates an example system that includes an example computing device that is representative of one or more computing systems and/or devices that may implement the various techniques described herein.

### DETAILED DESCRIPTION

### Overview

Conventional search query and search result processes may fail to prevent adverse outcomes for hosts of properties, such as damages to their property, incidental costs such as ticket fees, and so forth. Moreover, online marketplace platforms for property experience challenges in determining the riskiness or trustworthiness of participating users. Platforms offering goods or services cannot easily determine, without credible evidence (e.g., historical evidence from earlier transactions involving a user), that users requesting goods or services from other, host users are high risk, such as determining whether those requesting users may affect the host users' property adversely. This is particularly the case in online marketplace platforms in which transactions begin in the online world and end in the real world for the participating parties. For example, vehicle access platforms may allow guest users to search for, ask about, and book vehicles offered by host accounts on vehicle access applications; the transaction begins at a vehicle access application of a client device and ends with the guest user obtaining access to the host account's vehicle.

Conventional methods used by vehicle access platforms to predict the riskiness of guest users, or the outcome of an upcoming trip, generally utilize historical data of the guest user, such as past reviews, damages, late returns, late payments, or lack of compensation. However, those techniques are inherently reactive and ineffective at preventing bad actors until after damages have been incurred by the host accounts or the vehicle access platforms. Due to use of those techniques, costs may be substantially shouldered by the vehicle access platforms. Other conventional methods also produce a belated prediction of the riskiness of a guest user. For example, the belated prediction may be generated after the guest user has checked out. By way of example, the vehicle access platform may generate a belated prediction responsive to receiving a notification that the credit card used by a guest user's transaction has been flagged for fraudulent use. Overall, the conventional techniques used by vehicle access platforms are inefficient, reactive, and may result in damages, costs, and risk that are shouldered by host accounts and vehicle access platforms. The conventional techniques for returning search results enable and facilitate such adverse outcomes.

To overcome these problems, techniques for filtering vehicle search results for an upcoming trip are leveraged. A vehicle access platform leveraging the described filtering techniques overcomes the problems of conventional techniques for returning search results by filtering vehicle search results based on predicting an outcome for the upcoming trip for which a guest user requests vehicles. As discussed herein, the outcome is predicted by using at least one of user information, vehicle information, or trip information. By preventing access to certain categories of vehicles (e.g., luxury or exotic vehicles) based on predicting, for example, an outcome that is adverse, the damages, costs, and risk incurred by host accounts and vehicle access platforms, which are typically enabled by conventional techniques for returning search results, are proactively prevented instead-a guest user is not even shown search results for such cars in accordance with the described techniques.

As part of filtering vehicle search results for an upcoming trip, a vehicle access platform is configured to receive a search query from a client device to view vehicles for an upcoming trip. The vehicle access platform is also configured to return filtered search results for a subset of available vehicles. The search results returned by the vehicle access platform include one or more available vehicles that are provided by host accounts for access by guest users. As used herein, the phrase "available vehicle" refers to a vehicle that a host account has made accessible to guest users for a time interval and at a geographic location, where a search query for a guest user's upcoming trip requests vehicles during that time interval and at the location. Notably, for a vehicle to be an available vehicle, it is not already reserved by a different guest user during the time specified in the guest user's search query for the upcoming trip. In other words, for "available vehicles," the search query for an upcoming trip matches the time and geographic location that those vehicles remain accessible by their respective host accounts via the vehicle access platform.

This contrasts with unavailable vehicles. As used herein, the term "unavailable vehicles" may refer to vehicles that are not made accessible by host accounts during a time and at a location of a guest user's upcoming trip. Unavailable vehicles may also correspond to vehicles that are already reserved through the vehicle access platform by a different guest user during the time and at the location specified by a search query for an upcoming trip.

In one example, the search query may include information for an upcoming trip, such as a time, date, and/or location of the upcoming trip. In one or more implementations, the vehicle access platform identifies information about the upcoming trip. The identified information may include user information, vehicle information, and trip information. The vehicle access platform may receive such information from a variety of sources, including the search query, a history of a user account, a third-party source, a database maintained by the vehicle access platform, host accounts, and so forth. The information identified may be used by the vehicle access platform in a variety of ways, such as for determining the available vehicles for an upcoming trip, predicting an outcome of an upcoming trip, and so forth. In one or more implementations, the vehicle access platform determines available vehicles for an upcoming trip based on information identified about an upcoming trip; although a vehicle access platform may list many vehicles, some vehicles registered with the vehicle access platform may be unavailable for an upcoming trip based on any number of reasons, such as host account settings for a vehicle, prior reservation with different guest users, and/or other factors.

In accordance with the described techniques, one or more of the vehicles that are identified as available for a guest user's upcoming trip are prevented from being returned as search results. The vehicle access platform prevents those vehicles from being returned as search results based on an outcome predicted using at least one of the user information, the vehicle information, or the trip information. The vehicle access platform may predict an outcome of an upcoming trip via different techniques and the outcome may be expressed in one or more formats, such as numerical, semantic, score, ranking, severity, and so forth.

In one or more implementations, for instance, the vehicle access platform predicts an outcome based at least in part on an amount of time between a time at which a search query is received and a start time of the upcoming trip. If the amount of time is relatively short (e.g., an hour), for instance, the vehicle access platform may predict an outcome that is adverse (i.e., the vehicle access platform estimates the guest is a poor planner, therefore may not be careful, which could result in damage). In another implementation, the vehicle access platform may predict an outcome based at least in part on a start time of an upcoming trip. If the start time is 2:00 AM, when bars generally close, for instance, the vehicle access platform may predict an outcome that is adverse due to a higher likelihood of drunk driving.

In one or more implementations, the vehicle access platform uses one or more models to determine a probability of an adverse outcome occurring during an upcoming trip, and the vehicle access platform may predict an outcome based at least in part on the probability of an adverse outcome occurring. Alternatively, or additionally, the vehicle access platform may predict an outcome at least in part by using one or more models to determine a predicted severity of an adverse outcome for an upcoming trip. By way of example, determining a predicted severity may include determining, using one or more models, a predicted damage cost for an upcoming trip, such as a predicted damage cost of a vehicle that is totaled during an upcoming trip. Alternatively, or additionally, determining the predicted severity may include determining, using one or more models, a predicted incidental cost for an upcoming trip, such as a predicted parking, toll, or ticket fee for an upcoming trip.

In one or more implementations, identifying which of the one or more available vehicles to prevent from returning as search results includes identifying at least one vehicle that a client device is ineligible for based on a predicted severity of the predicted outcome satisfying a threshold, e.g., being higher (more severe) than a severity threshold. In accordance with the described techniques, at least one vehicle that the client device is ineligible for is not returned to the client device in the returned search results, and a guest user of the client device is thus prevented from viewing search results for those vehicles. In this way, damage is proactively prevented by preventing access to such vehicles.

In one or more implementations, the vehicle access platform controls access to available vehicles for an upcoming trip by returning to the client device filtered search results for a subset of the available vehicles that does not include the available vehicles which are prevented from being returned as search results. In one example, such prevented vehicles include vehicles that a guest user has been identified as being ineligible for based on a predicted severity of a predicted outcome, such that the predicted severity satisfies a threshold. In another example, such prevented vehicles include vehicles that a guest user has been identified as being ineligible for based on a probability of an adverse outcome occurring during an upcoming trip satisfying a threshold. In one or more implementations, the vehicle access platform prevents the prevented vehicles from being reservable.

The vehicle search result filtering techniques described herein confer various advantages. In accordance with the described techniques, for instance, filtering vehicle search results for an upcoming trip based on adverse outcomes may be particularly suited to online marketplace platforms for property, such as vehicle access platforms (e.g., Turo). For example, by not returning search results for particular vehicles responsive to a predicted adverse outcome (e.g., the predicted likelihood and/or predicted severity surpassing one or more respective thresholds), the vehicle access platform may prevent those adverse outcomes instead of enabling them to occur, e.g., if reservations for those vehicles were allowed to be carried out. This prevents friction at the vehicle access platform, unpredictability for host accounts, and instills a greater confidence in hosting vehicles with the vehicle access platform. In short, the vehicle access platform controls access to the available vehicles for an upcoming trip by returning to a client device filtered search results for a subset of the available vehicles that does not include vehicles prevented from being returned as search results, thus proactively preventing adverse outcomes instead of enabling those adverse outcomes to occur.

In the following discussion, an example environment is first described that may employ the techniques described herein. Example procedures are then described which may be performed in the example environment as well as other environments. Consequently, performance of the example procedures is not limited to the example environment and the example environment is not limited to performance of the example procedures.

### Example Environment

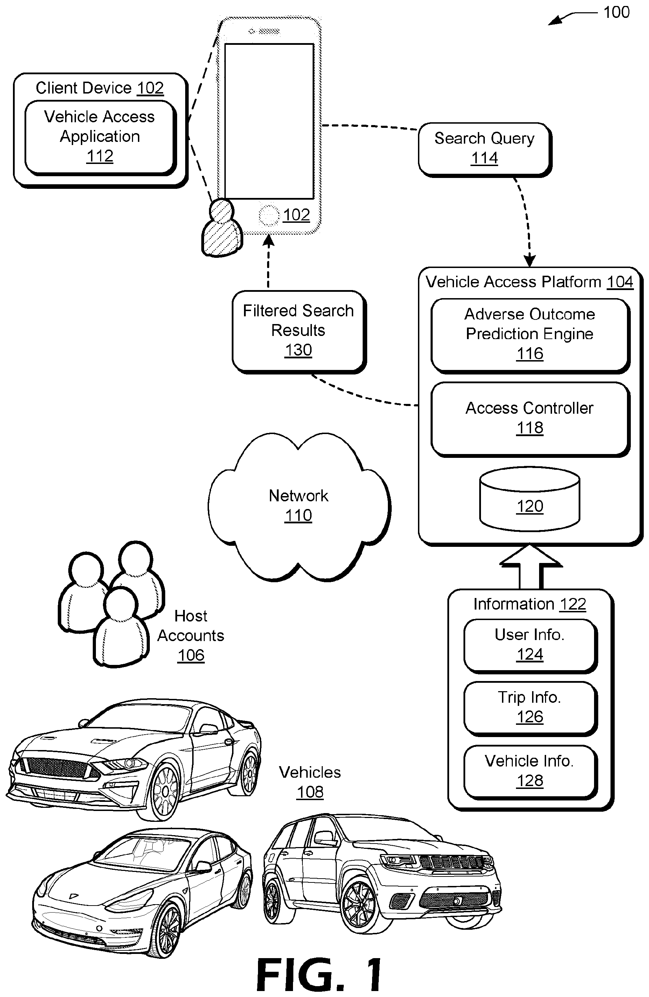

FIG. 1 is an illustration of a digital medium environment 100 in an example implementation that is operable to employ techniques for filtering vehicle search results for an upcoming trip as described herein. The illustrated digital medium environment 100 includes a client device 102, a vehicle access platform 104, and host accounts 106 that host vehicles 108 via the vehicle access platform 104. One or more of the client device 102, the vehicle access platform 104, the host accounts 106, or the vehicles 108 are communicatively coupled, one to another, via a network 110.

The client device 102 includes a vehicle access application 112, which is used to communicate a search query 114 relevant to the vehicles 108 to the vehicle access platform 104. For example, the vehicle access application 112 may be configured as a computer application that corresponds to the vehicle access platform 104 and display a user interface via a display device of the client device 102 for searching the vehicles 108 for an upcoming trip.

The vehicle access platform 104 includes an adverse outcome prediction engine 116, an access controller 118, and storage device 120. In one or more implementations, the storage device 120 may store information 122, which is depicted including user information 124, trip information 126, and vehicle information 128. Some of the information 122 may be identified from the search query 114 that is received by the vehicle access platform 104, e.g., from the client device 102. For example, the search query 114 may include some of the trip information 126, such as a time, date, or location of an upcoming trip. Based on the search query 114, the vehicle access platform 104 generates filtered search results 130 of the vehicles 108 (e.g., the vehicles 108 hosted by the host accounts 106 for use by guest users), and the vehicle access platform 104 provides the filtered search results 130 to the client device 102.

As part of providing the filtered search results 130, the vehicle access platform 104 uses the adverse outcome prediction engine 116 to predict an outcome of an upcoming trip. By way of example, the adverse outcome prediction engine 116 may predict an outcome by one or more of: determining a probability of an adverse outcome occurring during an upcoming trip, predicting an outcome based at least in part on a probability of an adverse outcome, predicting a severity of an adverse outcome of an upcoming trip, predicting an outcome based at least in part on a predicted severity, and so forth.

In accordance with the described techniques, the adverse outcome prediction engine 116 may be implemented using one or more models, e.g., one or more machine learning models. By way of example, the one or more models may be gradient boosted trees, random forests (e.g., deep random forests), neural networks (e.g., recurrent neural networks and convolutional neural networks), restricted Boltzmann machines, recurrent tensor networks, hidden Markov models, Gaussian mixture models, or other suitable models. The access controller 118 controls access to the vehicles 108 for an upcoming trip by returning to the client device 102 filtered search results 130, which include a subset of the vehicles 108 that are available during the upcoming trip and at a geographic location corresponding to the upcoming trip. For instance, a number of the vehicles 108 may be available for booking by guest users during a time of and at a location of an upcoming trip corresponding to the search query 114. However, the access controller 118 may prevent the filtered search results 130 from including a result for at least one of those available vehicles, e.g., the access controller prevents the result from being included in the filtered search results 130. By only providing search results for a limited subset of the available vehicles, the access controller 118 controls access to the vehicles 108, e.g., the access controller 118 does not allow some of the vehicles to be accessed.

Broadly speaking, the vehicle access platform 104 controls access to the vehicles 108 based on the information 122 about the upcoming trip. The vehicle access platform 104 may obtain the information 122 (and store it in the storage device 120) from any number of sources, including the client device 102, the search query 114, the vehicle access application 112, the host accounts 106, the vehicles 108, and the storage device 120.

In accordance with the described techniques, the user information 124 may describe various aspects of the guest user that requested vehicles via the search query 114. For instance, the user information 124 may include one or more of information received from an automatic user identification system, a driver market area of the guest user, the state of the guest user's driver's license, the license country of the guest user, the travel type of a guest user (e.g., leisure, business, and so forth), a credit card of a guest user, the prior transactional history of the guest user with the vehicle access platform, and so on. In one or more implementations, when the guest user is signed in with a guest user account (e.g., associated with the vehicle access platform 104), the user information 124 may be identified from the guest user account, such as via a user profile of the guest user account. Alternatively, user information 124 may be attributed to a guest user automatically, such as when a guest user is not signed in or signed up with a guest user account.

In accordance with the described techniques, the trip information 126 may describe various aspects of the upcoming trip requested via the search query 114. By way of example, the trip information 126 may include a trip length, a market of a geographic area of an upcoming trip, the geographic area of an upcoming trip, a city of an upcoming trip, a zip code of an upcoming trip, a state of an upcoming trip, a country of an upcoming trip, a lead time of an upcoming trip, booking features, trip start features, a start time of an upcoming trip, an end time of an upcoming trip, and so forth.

The vehicle information 128 may describe various aspects of the vehicles 108. The vehicle information 128 may be received from host accounts 106 that list the vehicles 108 on the vehicle access platform 104. The vehicle information 128 may include dates and times specified by respective host accounts that the vehicles 108 are available for access by guest users, a true market value of a vehicle 108, a model of a vehicle 108 (e.g., a Model X), a year of a vehicle 108, a category of a vehicle 108 (e.g., luxury, exotic, etc), a daily price for booking a vehicle 108, a make of a vehicle 108 (e.g., Tesla), a number of photos of a vehicle 108, images and/or video depicting a vehicle 108, mileage limits of a vehicle 108, mileage of a vehicle 108, a condition of a vehicle, an ability to instant book a vehicle 108, descriptions of automatic versus manual driving features of a vehicle 108, having verified photos of a vehicle 108, and so forth.

The host accounts 106 are accounts of host users that register the vehicles 108 with the vehicle access platform 104 and provide those vehicles for reservation via the vehicle access platform 104 and the vehicle access application 112. The information 122 received from the host accounts 106 (e.g., the vehicle information 128) may be used by the vehicle access platform 104 to predict outcomes of an upcoming trip via the adverse outcome prediction engine 116.

The vehicles 108 may include any type of vehicle, including but not limited to sedans, coups, sports cars, station wagons, hatchbacks, convertibles, sport-utility vehicles, minivans, pickup trucks, fire engines, tanks, monster trucks, art cars, RVs, ambulances, buses, caravans, mobile homes, coaches, jeeps, double decker buses, formula cars, planes, trains, bulldozers, backhoes, boats, limousines, minibuses, delivery vans, school buses, taxis, streetcars, rickshaws, quads, wagons, mail trucks, excavators, crane trucks, dump trucks, fuel trucks, front loaders, cement mixer trucks, autonomous vehicles, electric vertical takeoff and landing vehicles, skid steer loaders, road rollers, forklifts, tractors, subways, trains, jets, float planes, gliders, helicopters, biplanes, airships, jet fighters, barges, battleships, catamarans, cargo ships, ferries, gondolas, hovercrafts, motorboats, yachts, moto scooters, mopeds, motorbikes, tricycles, scooters, hot air balloons, aerial tramways, carriages, bullock carts, snow mobiles, hoverboards, and manned drones, to name just a few.

Computing devices that implement these devices and systems may be configured in a variety of ways. A computing device, for instance, may be configured as a desktop computer, a laptop computer, a mobile device (e.g., assuming a handheld configuration such as a tablet or mobile phone), and so forth. Thus, a computing device may range from full resource devices with substantial memory and processor resources (e.g., personal computers, game consoles) to a low-resource device with limited memory and/or processing resources (e.g., mobile devices). Additionally, although a single computing device is depicted and described in some instances, a computing device may be representative of a plurality of different devices, such as multiple servers utilized by a business to perform operations "over the cloud" for the services of the vehicle access platform 104 and the host accounts 106.

The client device 102 is configured to communicate with computing devices via the network 110, including by using the vehicle access application 112. The vehicle access application 112 also enables the client device 102 to communicate with the host accounts 106. Communications supported by the vehicle access application 112 may be configured in a variety of ways. Examples of configurations of communications include instant messages, posts, emails, text messages, notifications, and other types of user interactions that may be communicated via the network 110.

In general, functionality, features, and concepts described in relation to the examples above and below may be employed in the context of the example procedures described in this section. Further, functionality, features, and concepts described in relation to different figures and examples in this document may be interchanged among one another and are not limited to implementation in the context of a particular figure or procedure. Moreover, blocks associated with different representative procedures and corresponding figures herein may be applied together and/or combined in different ways. Thus, individual functionality, features, and concepts described in relation to different example environments, devices, components, figures, and procedures herein may be used in any suitable combinations and are not limited to the particular combinations represented by the enumerated examples in this description.

### Filtering Vehicle Search Results

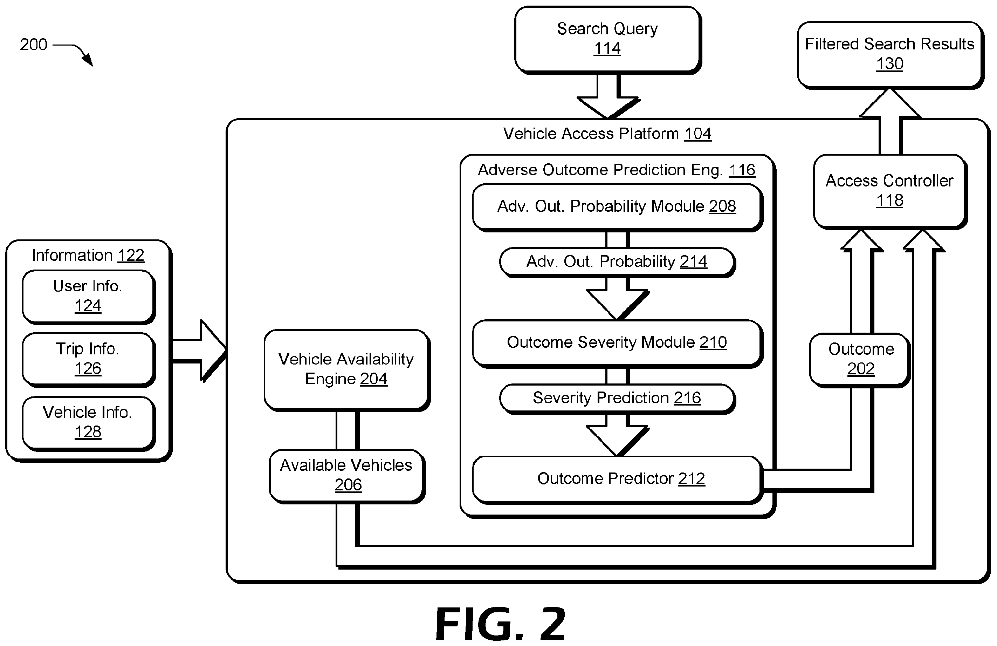

FIG. 2 depicts a system 200 in an example implementation showing operation of a vehicle access platform 104 of FIG. 1 in greater detail as controlling access to available vehicles 206 for an upcoming trip by filtering search results for an upcoming trip.

In system 200, the vehicle access platform 104 receives a search query 114. The search query 114, for example, may be received from a client device 102 responsive to user input via a vehicle access application 112 that is displayed via a user interface of the client device 102. Generally, the search query 114 includes information for an upcoming trip, such as a time, date, and/or location of the upcoming trip. For example, the search query 114 may include some of the trip information 126, such as a time, date, or location of an upcoming trip. Based on the search query 114, the vehicle access platform 104 generates filtered search results 130 of the available vehicles 206 of the vehicles 108 (e.g., the available vehicles 206 of the host accounts 106) and provides the filtered search results 130 to the client device 102.

As part of providing the filtered search results 130, the vehicle access platform 104 uses the adverse outcome prediction engine 116 to predict an outcome 202 of the upcoming trip. The outcome 202 is used by the access controller 118 to control access to the available vehicles 206 by returning filtered search results 130 to the client device 102. The outcome 202 is predicted based on the information 122 that is identified about an upcoming trip, including but not limited to the user information 124, the trip information 126, and the vehicle information 128.

Generally, the outcome 202 is a predicted result of an upcoming trip. By way of example, the outcome 202 may correspond to a probability that the upcoming trip will result in an adverse outcome and also to a predicted severity of such an adverse outcome if the upcoming trip does result in the adverse outcome. Based on this, the outcome 202 as predicted may reflect an amount of risk associated with the upcoming trip. Regarding risk of an upcoming trip, the more probable the upcoming trip is predicted to end in an adverse outcome, the riskier the trip. In addition, the more severe the predicted severity of the adverse outcome, the riskier the trip. This amount of risk may correspond to an amount (e.g., monetary, a relative score, etc.) that the vehicle access platform 104 and/or a respective host account 106 is predicted to be exposed to loss if the vehicle access platform 104 allows the upcoming trip to occur.

In one or more implementations, the outcome 202 corresponds to combination of the predicted probability of adverse outcome and the predicted severity of the adverse outcome, if such an outcome occurs during the upcoming trip. For instance, the outcome 202 may be a function of the probability that the upcoming trip will result in an adverse outcome and of the predicted severity of such an adverse outcome, e.g., the probability may be multiplied by the severity to obtain the outcome 202 or a value on which the outcome 202 is based. In one or more implementations, the function is a weighted function. It is to be appreciated, however, that the outcome 202 may be expressed in different ways, such as a normalized score, a ranking, a severity, a probability, a percentage, a fraction, semantically, numerically, or so forth. In one or more implementations, the outcome 202 corresponds to an estimate of uncollectible totaled dollar exposure of the vehicle access platform 104 for an upcoming trip.

In addition to the adverse outcome prediction engine 116, the vehicle access platform 104 is depicted including vehicle availability engine 204. Broadly speaking, the vehicle availability engine 204 determines which of the vehicles 108 are available for the upcoming trip requested by the search query 114. The vehicle availability engine 204 outputs available vehicles 206, which correspond to the vehicles 108 that the engine determines are available during the search query 114's upcoming trip. For example, the vehicle availability engine 204 may search the vehicle information 128 to identify which of the vehicles 108 that respective host accounts 106 have made accessible to guest users for a time interval and at a geographic location specified by the search query 114. As noted above, the available vehicles 206 correspond to the vehicles 108 having availability as specified by the respective host account 106 that matches a time and location of the search query 114.

The available vehicles 206 contrast with unavailable vehicles (not shown), which include the vehicles 108 that do not match the search query 114 in terms of at least one of time or location of the upcoming trip. Unavailable vehicles may also include the vehicles 108 that a respective host account 106 has made available for reservation at a time and location that match the search query 114, but that are reserved by a different user during the upcoming trip defined by the search query 114.

In general, the access controller 118 filters the available vehicles 206 based on the outcome 202 predicted to generate the filtered search results 130, such that the filtered search results 130 include results for a subset of the available vehicles 206 and such that one or more of the available vehicles 206 are not included in the filtered search results 130. By way of example, the access controller 118 may identify a number of the available vehicles 206 to prevent from being returned as search results to the client device 102 based on the outcome 202 indicating or otherwise representing a first risk of the upcoming trip.

Responsive to the outcome 202 indicating or otherwise representing a second, lower amount of risk for the upcoming trip than the first risk (i.e., less risky), though, the access controller 118 may identify a lesser number of the available vehicles 206 to prevent from being returned as search results to the client device 102. By contrast, responsive to the outcome 202 indicating or otherwise representing a third, greater amount of risk for the upcoming trip than the first risk (i.e., riskier), the access controller 118 may identify a larger number of the available vehicles to prevent from being returned as search results to the client device 102. In one or more implementations, the access controller 118 may identify the available vehicles 206 to prevent from being returned by comparing the outcome 202 (e.g., risk) to one or more thresholds. For example, if the outcome 202 (e.g., risk) surpasses a first threshold then the access controller 118 may prevent the available vehicles 206 associated with a risk level below that threshold from being included in the filtered search results 130. Further, if the outcome 202 (e.g., risk) surpasses a second threshold then the access controller 118 may prevent the available vehicles 206 associated with a risk level below the second threshold from being included in the filtered search results 130. It is to be appreciated that the access controller 118 may use any number of thresholds (e.g., risk thresholds) to identify which of the available vehicles 206 to prevent from including as search results. For instance, the access controller 118 may determine a different threshold amount of risk for each of the available vehicles 206. Regardless, the access controller 118 configures the filtered search results 130 to include results for the available vehicles 206 minus the available vehicles 206 prevented from being included as search results based on the outcome 202, e.g., configuring the filtered search results 130 based on a predicted risk of allowing the upcoming trip to occur.

In the illustrated example, the adverse outcome prediction engine 116 is depicted including adverse outcome probability module 208, outcome severity module 210, and outcome predictor 212. These components of the adverse outcome prediction engine 116 may operate in concert to generate the outcome 202. It is to be appreciated further that the adverse outcome prediction engine 116 may include fewer, more, or different components to generate the outcome 202. For example, the adverse outcome prediction engine 116 may include a ranking engine, e.g., configured to rank guest users, one user to another, or upcoming trips, one trip to another, such that trips are ranked in terms of their riskiness.

Regardless of how the adverse outcome prediction engine 116 is implemented in operation, the adverse outcome probability module 208 is depicted outputting adverse outcome probability 214 in the illustrated example. The adverse outcome probability 214 represents a probability of an adverse outcome occurring during the upcoming trip defined by the search query 114. The adverse outcome probability 214 may represent a probability that any adverse outcome will occur during the upcoming trip. Alternatively, or additionally, the adverse outcome probability 214 may represent a combination of probabilities, such as probabilities for each of a number of predetermined adverse outcomes, e.g., a probability of totaling a vehicle 108, a probability of a "minor" adverse outcome (an adverse outcome where the loss does not exceed some threshold amount of loss), and so forth. In one or more implementations, the adverse outcome probability 214 output by the adverse outcome prediction engine 116 is a probability of no collection of costs by the vehicle access platform 104 for an upcoming trip, such as incidental costs for an upcoming trip or damage costs for an upcoming trip.

Here, the adverse outcome probability module 208 outputs the adverse outcome probability 214. In accordance with the described techniques, the adverse outcome probability module 208 generates the adverse outcome probability 214 based on the information 122, e.g., based on one or more of the user information 124 of a guest user corresponding to the search query 114, the trip information 126 as defined by the search query 114, and/or the vehicle information 128 corresponding to the available vehicles 206. Notably, certain factors or characteristics of the upcoming trip may be identified as one or more patterns in the information 122 by the adverse outcome probability module 208. In one or more implementations, for example, the adverse outcome probability module 208 may include or otherwise be configured as one or more models (e.g., machine learning models) trained or otherwise built on historical data describing user information, trip information, and vehicle information of completed trips. Moreover, as trips are completed via the vehicle access platform 104, the adverse outcome probability module 208 may update those models to improve their ability to accurately predict outcomes, e.g., using the user information 124, the trip information 126, and the vehicle information 128. By way of example, training such models may involve exposing those models to training data, where each instance of training data includes the user information, the trip information, and the vehicle information for a trip that occurred as well as data describing whether an adverse outcome occurred during the trip (or whether any of a plurality of predetermined adverse outcomes occurred).

By way of example, the adverse outcome probability module 208, based on the training and pattern recognition, may be configured to recognize patterns described in the information 122 that indicate an increased probability of an adverse outcome occurring. In one or more implementations, some factors that the adverse outcome probability module 208 may identify in the information 122, and for which the module may determine an increased probability of an adverse outcome occurring, include a trip time starting at a risky time (e.g., around closing time of bars), user information 124 indicating a prior negative or short trip history of a guest user with the vehicle access platform 104, a trip history of a guest user indicating no previous trips with the vehicle access platform 104, a relatively short amount of time between a time at which the search query 114 is received and the start time of the upcoming trip indicating an impulsive user, an upcoming trip's occurrence during a holiday celebrated with copious imbibement, or other factors.

By way of example, a risky trip start time (e.g., at 2 am) may result in an outcome 202 predicted that has, for example, a higher probability of being an adverse outcome. In another implementation, the adverse outcome probability 214 is predicted at least in part on a trip history with the vehicle access platform 104. For example, if a guest user account previously had a negative history with the vehicle access platform 104, such as damaging a vehicle or having unpaid fees, the adverse outcome probability module 208 is likely to predict an adverse outcome probability 214 indicating a higher probability of an adverse outcome occurring for an upcoming trip. On the contrary, if a guest user account previously had a long, positive history with vehicle access platform 104, such as having many positive reviews, the adverse outcome probability 214 predicted is likely to, for example, predict an adverse outcome probability 214 indicating a lower probability of an adverse outcome occurring for an upcoming trip. In general, these various factors or characteristics may be learned by the above-mentioned one or more models.

In this example system 200, the adverse outcome probability module 208 is depicted outputting the adverse outcome probability 214, and the outcome severity module 210 is depicted receiving the adverse outcome probability 214. The outcome severity module 210 may generate and output the severity prediction 216 based at least in part on the adverse outcome probability 214. Additionally, or alternatively, the outcome severity module 210 may generate the severity prediction 216 based on the information 122. For instance, the severity prediction 216 may be based, in part or largely, on the vehicle information 128, such as a market value of a vehicle as described by respective vehicle information 128. Regarding market value, for instance, a same adverse outcome (e.g., denting a bumper) for two different vehicles may correspond to vastly different severity based on their market values. Denting a bumper for a vehicle having a market value of $5,000 may be significantly less severe than causing a same dent to a bumper for a different vehicle having a market value of $100,000.

The outcome severity module 210 may output the severity prediction 216 as one or more values representing various measures of severity. For example, the severity prediction 216 may be output as a monetary amount (e.g., an amount an adverse outcome will cost if it occurs during the upcoming trip), a severity score, a normalized score between zero and one, a percentage ratio, or fraction indicating how severe an adverse outcome will be if it occurs during the upcoming trip. The severity prediction 216, for example, may have a numerical or semantic format indicating an amount of severity. In one example, for instance, the severity prediction 216 may be "high severity", "medium severity", "low severity", or "no severity".

As noted above, the outcome severity module 210 generates the severity prediction 216 based on the information 122. For example, certain factors or characteristics of an upcoming trip may increase the severity of an adverse outcome, if it occurs. Some factors that may increase the severity of an outcome occurring include a trip time starting at a risky time (e.g., around closing time of bars when totaling a vehicle or causing injury (or death) is predicted to be greater), a higher fair market value of a vehicle booked (e.g., luxury or exotic vehicles), a risky weather forecast predicted for an upcoming trip (e.g., a hurricane, tornado, tsunami, etc.), an upcoming trip's occurrence during a holiday celebrated with traditions predicted to be risky (e.g., copious imbibement), an existing criminal history associated with a guest user account, or other factors.

In one or more implementations, the outcome severity module 210 may include or otherwise be configured as one or more models (e.g., machine learning models) trained or otherwise built on historical data describing user information, trip information, and vehicle information of completed trips and also information about a severity of any adverse outcomes, if an adverse outcome occurred during those trips. Moreover, as trips are completed via the vehicle access platform 104, the outcome severity module 210 may update those models to improve their ability to accurately predict severity of adverse outcomes, e.g., using the user information 124, the trip information 126, the vehicle information 128, and the adverse outcome probability 214. In one or more implementations, training such models may involve exposing those models to training data, where each instance of training data includes the user information, the trip information, the vehicle information, and information describing whether any adverse outcome occurred for a trip as well as data describing a severity of any adverse outcome that occurred during the trip, e.g., a monetary cost of an adverse outcome that occurred, a ranking of a cost of an adverse outcome relative to costs of other adverse outcomes that have been observed, and so forth.

In one or more implementations, the outcome severity module 210 may generate the severity prediction 216, at least in part, by generating a predicted incidental cost for an upcoming trip. Incidental costs are costs incurred in addition to the service of booking an available vehicle 206 of a host account 106 for use, e.g., driving. Some examples of incidental costs include speeding tickets, parking tickets, or toll fees. Determining the predicted incidental cost for an upcoming trip may be enabled using one or more models.

Alternatively, or additionally, the outcome severity module 210 may generate the severity prediction 216, at least in part, by generating a predicted damage cost for an upcoming trip. Damage costs are costs of damages incurred by an available vehicle 206 of a host account 106 during a trip. Some examples of damage costs include costs for totaling of an available vehicle 206 (e.g., when the cost of repairs is equal to or greater than 65% of a fair market value of a vehicle before an accident), water damage of an available vehicle 206, scratched paint of an available vehicle 206, or theft of an available vehicle 206, to name just a few.

In the illustrated example, the severity prediction 216 is received by the outcome predictor 212. Generally speaking, the outcome predictor 212 generates and outputs the outcome 202. In one or more implementations, the outcome predictor 212 generates the outcome 202 based on one or more of the adverse outcome probability 214 and/or the severity prediction 216. For instance, the outcome predictor may generate the outcome 202 as a function of the adverse outcome probability 214 and the severity prediction 216. In at least one example, the outcome predictor 212 may generate the outcome 202, in part, by multiplying the adverse outcome probability 214 by the severity prediction 216. Alternatively, or additionally, the outcome predictor 212 may determine the outcome as a weighted function of the adverse outcome probability 214 and the severity prediction 216. It is to be appreciated that the outcome predictor 212 may combine the adverse outcome probability 214 and the severity prediction 216 in other ways to determine the outcome. Alternatively, or in addition, the outcome predictor 212 or another module may perform additional operations on the value obtained as a function of the adverse outcome probability 214 by the severity prediction 216. For example, the outcome predictor 212 may rank the value obtained relative to the value obtained in relation to trips that have already occurred or relative to trips that never occurred, because search results were for those trips were prevented from being returned as search results.

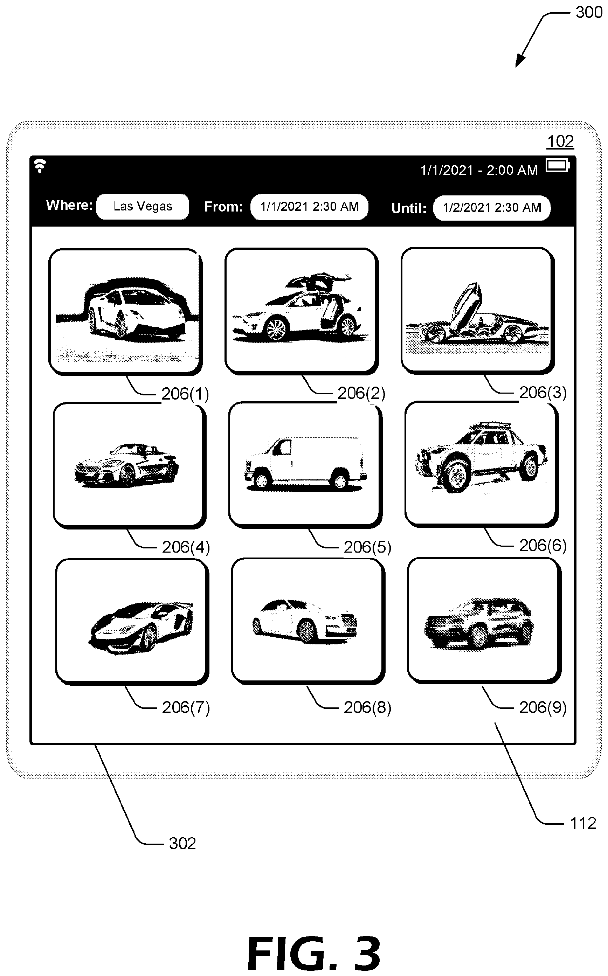

FIG. 3 depicts an example implementation 300 of a user interface 302 displaying unfiltered search results received from the vehicle access platform 104 that include the available vehicles 206. The illustrated example implementation 300 includes from FIG. 1 an example of the client device 102 displaying an example of the vehicle access application via a user interface 302 of the client device, e.g., a touchscreen.

Here, the user interface 302 includes unfiltered search results returned from the vehicle access platform 104, the unfiltered search results including the available vehicles 206. In the illustrated example implementation 300, the user interface 302 includes selectable elements that are selectable via the vehicle access application 112 to submit a search query 114, the search query 114 including information such as a location, starting time, and an ending time for an upcoming trip. It is to be appreciated that the vehicle access application 112 may include other selectable elements that are selectable to submit a search query 114, such as selectable inputs that enable searching based on a make of a vehicle, a model of a vehicle, a category of a vehicle, a price range of a vehicle, and so forth.

Specifically, in this illustrated example implementation 300, the vehicle access platform 104 receives, at 2 am on January the 1^{st} of 2021, a search query 114 including a location (Las Vegas), a starting time (January the 1^{st} of 2021 at 2:30 am), and an ending time (January the 2^{nd} of 2021 at 2:30 am). The vehicle access platform 104 is also configured to determine available vehicles 206(1-9) for the upcoming trip based on the information 122 about the upcoming trip. Despite the risky start time (e.g., around the closing time for bars wherein DUI accidents are more common) for the upcoming trip, the upcoming trip's small amount of time between the time at which the search query is received and the start time of the upcoming trip (e.g., thus indicating a guest user who is predicted to be impulsive), the upcoming trip's occurrence during a risky holiday (e.g., a holiday that is often celebrated with copious imbibement such as New Year's Eve), or other factors, this illustrated example implementation 300 returns unfiltered search results including available vehicles 206(1-9), enabling full access of the guest user to the available vehicles 206. The return of unfiltered search results via the user interface 302 thus enables damages, cost, and risk to be shouldered by the host accounts and the vehicle access platforms, as with conventional search query and results techniques.

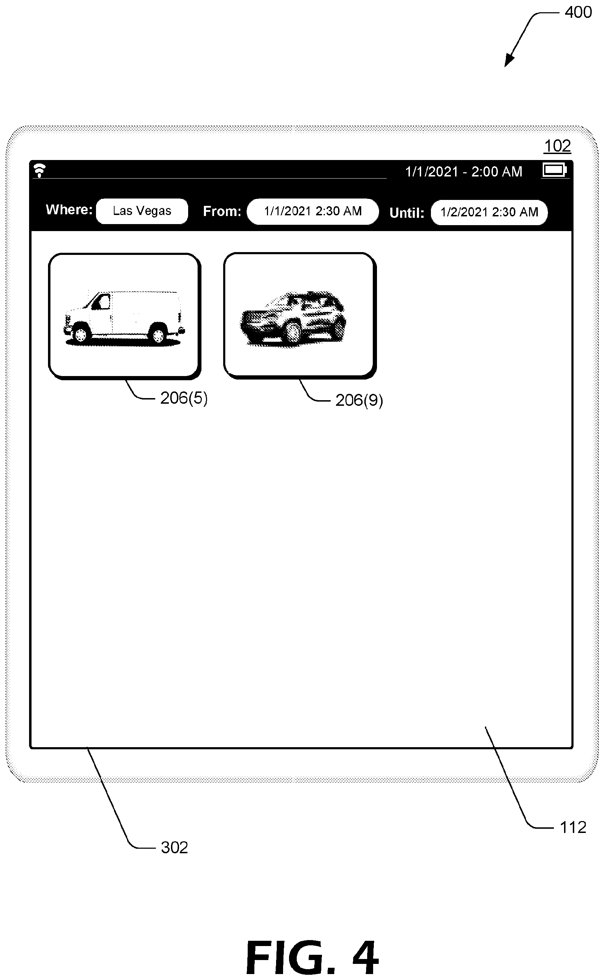

FIG. 4 depicts an example implementation 400 of the user interface 302 displaying filtered search results 130 received from the vehicle access platform 104, where the filtered search results 130 include a subset of the available vehicles that does not include available vehicles prevented from being returned.

Like illustrated example implementation 300, illustrated example implementation 400 includes from FIG. 1 an example client device displaying an example of the client device displaying an example of the vehicle access application via a user interface 302 of the client device 102, e.g., a touchscreen. The illustrated example implementation 400 also includes from FIG. 3 the user interface 302 of client device 102, the user interface 302 displaying the vehicle access application 112. In contrast to the illustrated example implementation 300, though, the user interface 302 depicted in the illustrated example implementation 400 does not include unfiltered search results. Instead, the user interface 302 includes filtered search results 130 in this example 400, e.g., available vehicles 206 corresponding to filtered search results, the filtered search results 130 not including vehicles prevented from being returned as filtered search results 130.

Like in illustrated example implementation 300, illustrated example implementation 400 depicts that the vehicle access platform 104 receives, at 2 am on January the 1^{st} of 2021, a search query 114 including a location (Las Vegas), a starting time (January the 1^{st} of 2021 at 2:30 am), and an ending time (January the 2^{nd} of 2021 at 2:30 am). The vehicle access platform 104 is configured to determine available vehicles 206(1-9) for the upcoming trip based on the information 122 about the upcoming trip. Based on an outcome 202 predicted using at least one of the user information 124, the vehicle information 128, or the trip information 126, the vehicle access platform 104 is configured to identify one or more vehicles to prevent from being returned as search results. The outcome 202 predicted in this example illustration is adverse. The adverse nature of the outcome 202 predicted may be based, for example, on the upcoming trip's start time being around the risky closing time (e.g., closing time for bars), the small amount of time between the time at which the search query is received and the start time of the upcoming trip, the upcoming trip's occurrence during a risky holiday that is generally celebrated with copious imbibement and followed by DUIs and other traffic accidents, or other factors. In one or more implementations, the outcome 202 predicted may be based, for example, on a negative prior history of a guest user's account, if a guest user is logged into a guest user's account while submitting the search query 114.

In this example specifically, the filtered search results 130 that are returned include available vehicles 206(5 and 9), whereas the prevented vehicles include available vehicles 206(1, 2, 3, 4, 6, 7, and 8), which are not returned with the filtered search results 130. In this illustrated example 400, the available vehicles 206 presented as the filtered search results 130 returned are few and non-luxurious, thus effectively prevent damages, cost, and risk that otherwise would have been enabled by conventional search query and results techniques.

It is to be appreciated that the above noted example is merely one example of how filtered search results may be returned responsive to predicting an outcome that is adverse (e.g., negative, risky, severe, etc.) or above a threshold of adverseness (e.g., riskiness, severity, etc.).

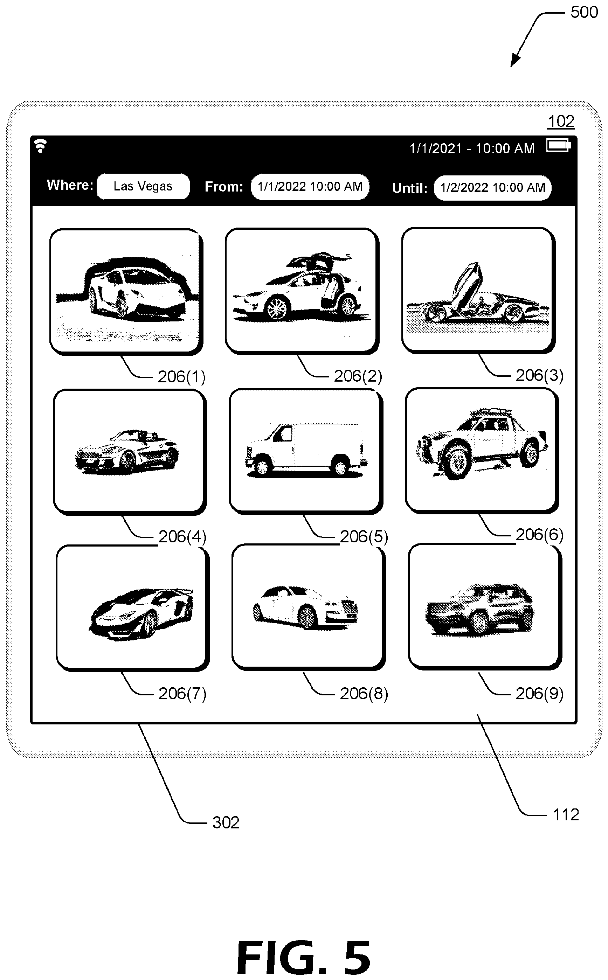

Regardless, by returning filtered search results 130 to control access to the available vehicles 206 based at least in part on an outcome 202 that is predicted to be adverse, the user interface 302 provides filtered search results 130 that proactively prevent damages, cost, and risk that would otherwise be shouldered by the host accounts 106 and the vehicle access platform 104 under the use of conventional search query and result techniques. This contrasts with fully displaying unfiltered search results including all available vehicles 206, thus facilitating access to all available vehicles 206. In this context, consider the following discussion of FIG. 5.

FIG. 5 depicts another example implementation 500 of the user interface 302 displaying filtered search results 130 received from the vehicle access platform 104, where the filtered search results 130 include a subset of the available vehicles 206 that does not include available vehicles 206 prevented from being returned.

Like illustrated examples 300 and 400, illustrated example implementation 500 includes from FIG. 1 an example client device 102 displaying an example of the client device 102 displaying an example of the vehicle access application 112 via a user interface 302 of the client device 102, e.g., a touchscreen. In contrast to the example 300, though, the user interface 302 depicted in the illustrated example implementation 500 does not include unfiltered search results. Instead, the user interface 302 includes filtered search results 130 in this illustrated example implementation 500, e.g., available vehicles 206 corresponding to filtered search results 130, the filtered search results 130 not including vehicles prevented from being returned as filtered search results 130. In contrast to the illustrated example implementation 400, though, which includes filtered search results 130 based at least in part on an outcome 202 predicted that is adverse (e.g., risky, severe, etc.), the user interface 302 depicted in the illustrated example implementation 500 includes filtered search results 130 based at least in part on a outcome 202 predicted that is not adverse (e.g., not risky, severe, negative, etc.).

Unlike in illustrated example implementations 300 and 400, illustrated example implementation 500 depicts that the vehicle access platform 104 receives, at 10 am on January the 1^{st} of 2021, a search query 114 including a location of "Las Vegas", a starting time of January the 1^{st} of 2022 at 10 am, and an ending time of January the 2^{nd} of 2022 at 10 am. Based on an outcome 202 predicted using at least one of the user information 124, the vehicle information 128, or the trip information 126, the vehicle access platform 104 is configured to identify one or more vehicles to prevent from being returned as search results. The outcome 202 predicted in this illustrated example implementation 500 is non-adverse. The non-adverse nature of the outcome 202 predicted may be based on, for example, the upcoming trip's start time being during a non-risky time, the large amount of time between the time at which the search query is received and the start time of the upcoming trip (indicated a non-impulsive and thus non-risky guest user), or other factors. For example, generally, guest users that prepare for accommodations far in advance (e.g., preparing for accommodations dated one year from the date of the search query as depicted in this illustrated example implementation 500) tend to be less risky, and therefore are less likely to result in an outcome 202 predicted that is adverse. In one or more implementations, the outcome 202 predicted may be based, for example, on a positive prior history of a guest user's account, if the guest user is logged into a guest user's account while submitting the search query 114.

In this example implementation 500 specifically, the filtered search results 130 that are returned include available vehicles 206(1-9), whereas the prevented vehicles include none of the available vehicles 206 (1-9), which otherwise would not have been returned with the filtered search results 130. In this illustrated example implementation 500, the available vehicles 206 presented as the filtered search results 130 include luxury vehicles, based at least in part on the outcome 202 predicted being generally non-risky.

It is to be appreciated that the above noted example implementation 500 is merely one example implementation of how filtered search results 130 may be returned responsive to predicting an outcome 202 that is generally non-adverse, non-negative, non-risky, non-severe, or below a threshold of riskiness, adverseness, or severity.

Regardless, by returning filtered search results 130 to control access to the available vehicles 206 based at least in part on an outcome 202 that is predicted to be adverse, the user interface 302 provides filtered search results 130 that proactively prevent damages, cost, and risk that would otherwise be shouldered by the host accounts 106 and the vehicle access platform 104 under the use of conventional search query and result techniques, while also facilitating transactions between guest users and host accounts 106 when an outcome 202 predicted is below a particular threshold of riskiness, adverseness, or severity. This contrasts with fully displaying unfiltered search results including all available vehicles 206 instead of returning filtered search results 130 based on an outcome 202 predicted.

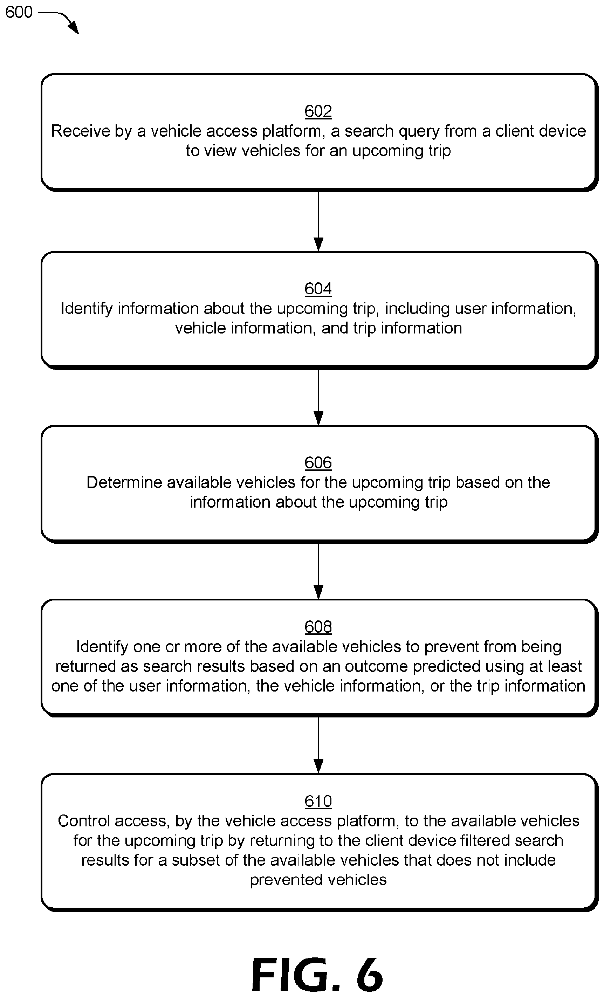

FIG. 6 depicts a procedure in an example implementation 600 in which access to available vehicles 206 for an upcoming trip is controlled by a vehicle access platform 104 by returning to a client device 102 filtered search results 130 for a subset of available vehicles 206 that does not include available vehicles 206 prevented from being returned.

The vehicle access platform 104 receives a search query 114 from a client device 102 to view vehicles 108 for an upcoming trip (block 602). In accordance with the principles discussed herein, the search query 114 is used to request search results including vehicles for an upcoming trip. As discussed throughout, the search query 114 may include search terms, keywords, or other types of information to facilitate the return of relevant search results. By way of example, user interaction with a user interface 302 of a client device 102 may enable guest users to submit a search query 114 that is received by the vehicle access platform 104 from the client device 102. User interaction with a vehicle access application 112 of the client device 102 may also enable guest users to enter details of a search query to be received by the vehicle access platform 104.

The vehicle access platform 104 is configured to identify information 122 about the upcoming trip, including user information 124, vehicle information 128, and trip information 126 (block 604). By way of example, the vehicle access platform 104 receives or obtains the information 122 about the upcoming trip. This receiving or obtaining may be from a variety of sources, such as the host accounts 106, the client device 102, the search query 114, and so forth. As discussed throughout, the information 122 is generally used to determine available vehicles 206 for the upcoming trip and to predict an outcome 202 of the upcoming trip.

The vehicle access platform 104 is also configured to determine available vehicles 206(1-9) for the upcoming trip based on the information 122 about the upcoming trip (block 606). A discussed throughout, the vehicle access platform 104 is configured to determine available vehicles based on the user information 124, the vehicle information 128, or the trip information 126. By way of example, the vehicle availability engine 204 is configured to determine available vehicles 206 for the upcoming trip based on the information 122 about the upcoming trip, the information 122 including the user information 124, the vehicle information 128, and the trip information 126. The available vehicles 206 determined are then received by the access controller 118 of the vehicle access platform 104.

Based on an outcome 202 predicted using at least one of the user information 124, the vehicle information 128, or the trip information 126, the vehicle access platform 104 is configured to identify one or more vehicles to prevent from being returned as search results (block 608). By way of example, the access controller 118 is configured to receive the outcome 202 from the outcome predictor 212 of the adverse outcome prediction engine 116, and the access controller 118 is also configured to receive the available vehicles 206 from the vehicle availability engine 204. The adverse outcome prediction engine 116 is also configured to receive the information 122 including the user information 124, the trip information 126, and the vehicle information 128. By way of example, the outcome 202 may be predicted by the outcome predictor 212 based on at least one of the received user information 124, the trip information 126, or the vehicle information 128 obtained or stored by the vehicle access platform, the adverse outcome probability 214 received from the adverse outcome probability module 208, and/or the severity prediction 216 received from the outcome severity module 210.

The vehicle access platform 104 is configured to control access to the available vehicles 206 for the upcoming trip by returning to the client device 102 filtered search results 130 for a subset of the available vehicles 206 that does not include prevented vehicles (block 610). By way of example, the access controller 118 is configured to control access to the available vehicles 206 by returning to the client device 102 filtered search results 130 for a subset of the available vehicles 206 that does not include prevented vehicles. By way of example, the user interface 302 of the client device is configured to receive and display the filtered search results 130. In accordance with the principles discussed herein, the access controller 118 controls access to the available vehicles 206 by not returning the prevented vehicles as search results.

Having described examples of procedures in accordance with one or more implementations, consider now an example of a system and device that can be utilized to implement the various techniques described herein.

### Example System and Device

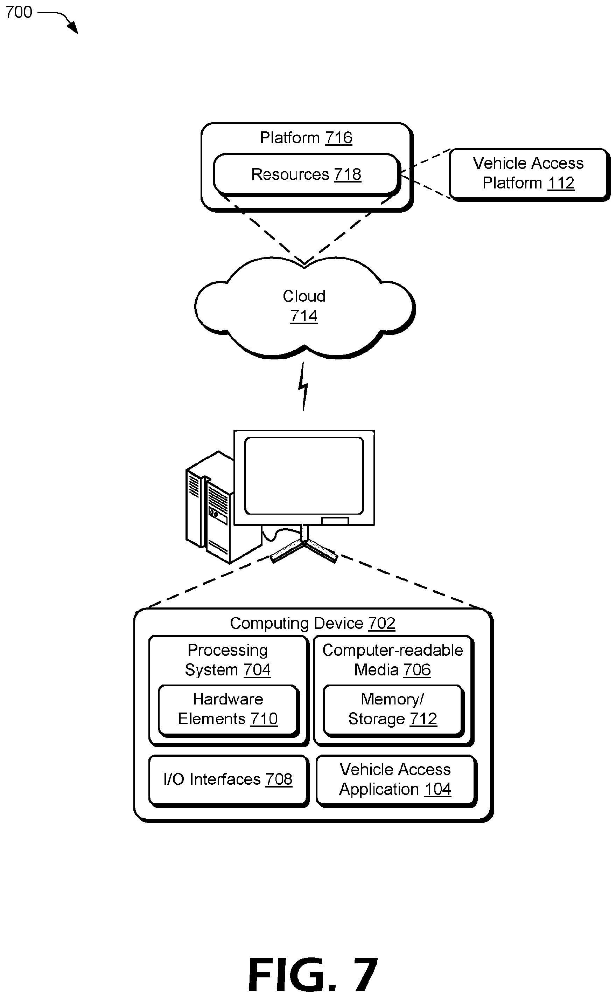

FIG. 7 illustrates an example system generally at 700 that includes an example computing device 702 that is representative of one or more computing systems and/or devices that may implement the various techniques described herein. This is illustrated through inclusion of the vehicle access platform 112 and the vehicle access application 104. The computing device 702 may be, for example, a server of a service provider, a device associated with a client (e.g., a client device), an on-chip system, and/or any other suitable computing device or computing system.

The example computing device 702 as illustrated includes a processing system 704, one or more computer-readable media 706, and one or more I/O interface 708 that are communicatively coupled, one to another. Although not shown, the computing device 702 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 704 is representative of functionality to perform one or more operations using hardware. Accordingly, the processing system 704 is illustrated as including hardware element 710 that may be configured as processors, functional blocks, and so forth. This may include implementation in hardware as an application specific integrated circuit or other logic device formed using one or more semiconductors. The hardware elements 710 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 706 is illustrated as including memory/storage 712. The memory/storage 712 represents memory/storage capacity associated with one or more computer-readable media. The memory/storage component 712 may include volatile media (such as random access memory (RAM)) and/or nonvolatile media (such as read only memory (ROM), Flash memory, optical disks, magnetic disks, and so forth). The memory/storage component 712 may include fixed media (e.g., RAM, ROM, a fixed hard drive, and so on) as well as removable media (e.g., Flash memory, a removable hard drive, an optical disc, and so forth). The computer-readable media 706 may be configured in a variety of other ways as further described below.

Input/output interface(s) 708 are representative of functionality to allow a user to enter commands and information to computing device 702, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 702 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 702. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and nonremovable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 702, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 710 and computer-readable media 706 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 710. The computing device 702 may be configured to implement particular instructions and/or functions corresponding to the software and/or hardware modules. Accordingly, implementation of a module that is executable by the computing device 702 as software may be achieved at least partially in hardware, e.g., through use of computer-readable storage media and/or hardware elements 710 of the processing system 704. The instructions and/or functions may be executable/operable by one or more articles of manufacture (for example, one or more computing devices 702 and/or processing systems 704) to implement techniques, modules, and examples described herein.

The techniques described herein may be supported by various configurations of the computing device 702 and are not limited to the specific examples of the techniques described herein. This functionality may also be implemented all or in part through use of a distributed system, such as over a "cloud" 714 via a platform 716 as described below.

The cloud 714 includes and/or is representative of a platform 716 for resources 718, the resources 718 including vehicle access platform 104. The platform 716 abstracts underlying functionality of hardware (e.g., servers) and software resources of the cloud 714. The resources 718 may include applications and/or data that can be utilized while computer processing is executed on servers that are remote from the computing device 702. Resources 718 can also include services provided over the Internet and/or through a subscriber network, such as a cellular or Wi-Fi network.

The platform 716 may abstract resources and functions to connect the computing device 702 with other computing devices. The platform 716 may also serve to abstract scaling of resources to provide a corresponding level of scale to encountered demand for the resources 718 that are implemented via the platform 716. Accordingly, in an interconnected device embodiment, implementation of functionality described herein may be distributed throughout the system 700. For example, the functionality may be implemented in part on the computing device 702 as well as via the platform 716 that abstracts the functionality of the cloud 714.

## Claims

1. A computer-implemented method comprising:
receiving, by a vehicle access platform (104), a search query (114) from a client device (102) to view vehicles (108) for an upcoming trip;
identifying, by the vehicle access platform (104), information (122) about the upcoming trip, including user information (124), vehicle information (128), and trip information (126);
determining, by the vehicle access platform (104), available vehicles (206) for the upcoming trip based on the information (122) about the upcoming trip;
generating, by the vehicle access platform (104), a predicted outcome (202) resulting from the upcoming trip, the predicted outcome being distinct from a determination of vehicle availability for the upcoming trip and generated based on at least one of the user information, the vehicle information, or the trip information;
based on the predicted outcome (202), identifying, by the vehicle access platform (104), one or more of the available vehicles (206) to prevent from being returned as search results (130); and
controlling, by the vehicle access platform (104), access to the available vehicles (206) for the upcoming trip by returning to the client device (102) filtered search results (130) for a subset of the available vehicles (206) that does not include prevented vehicles based on the predicted outcome (202).

2. The computer-implemented method of claim 1, wherein the search query (114) is received via user input to a user interface (302) displayed at the client device (102).

3. The computer-implemented method of claim 2, wherein the user input indicates the trip information (126) including a location of the upcoming trip, a start time of the upcoming trip, and an end time of the upcoming trip.

4. The computer-implemented method of claim 3, wherein the user information (124) includes a trip history with the vehicle access platform (104), and wherein the predicted outcome (202) is generated based at least in part on the trip history.

5. The computer-implemented method of claim 4, wherein the trip history indicates one or more previous trips with the vehicle access platform (104).

6. The computer-implemented method of claim 1, wherein the generating of the predicted outcome (202) further comprises:
generating, using one or more models, a probability (214) of an adverse outcome occurring during the upcoming trip; and wherein the generating of the predicted outcome (202) is based at least in part on the probability (214) of the adverse outcome.

7. The computer-implemented method of claim 1, wherein the generating of the predicted outcome (202) further comprises:
generating, using one or more models, a predicted severity (216) of an adverse outcome for the upcoming trip; and wherein the generating of the predicted outcome (202) is based at least in part on the predicted severity (216).

8. The computer-implemented method of claim 7, wherein generating of the predicted severity (216) includes generating, using one or more models, a predicted damage cost resulting from the upcoming trip.

9. The computer-implemented method of claim 7, wherein the generating of the predicted severity (216) includes generating, using one or more models, a predicted incidental cost resulting from the upcoming trip.

10. The computer-implemented method of claim 7, wherein the identifying of the one or more available vehicles (206) includes identifying at least one vehicle that the client device (102) is ineligible for based on the predicted severity (216) being higher than a predefined threshold severity amount.

11. A system (700) comprising:
a vehicle access platform (104) implemented at least partially in hardware (710) of a computing device (702) to receive a search query (114) from a client device (102) to view vehicles (108) for an upcoming trip;
an information identification module implemented at least partially in the hardware (710) of the computing device (702) to identify information (122) about the upcoming trip, including user information (124), vehicle information (128), and trip information (126);
a vehicle availability engine (204) implemented at least partially in the hardware (710) of the computing device (702) to determine available vehicles (206) for the upcoming trip based on the information (122) about the upcoming trip;
an adverse outcome prediction engine (116) implemented at least partially in the hardware (710) of the computing device (702) to:
generate a predicted outcome (202) resulting from the upcoming trip, in which the predicted outcome (202) is distinct from a determination of vehicle availability for the upcoming trip and generated based on at least one of the user information, the vehicle information or the trip information; and
identify, based on the predicted outcome (202), one or more of the available vehicles (206) to prevent from being returned as search results (130); and
an access controller (118) implemented at least partially in the hardware (710) of the computing device (702) to control access to the available vehicles (206) for the upcoming trip by returning to the client device (102) filtered search results (130) for a subset of the available vehicles (206) that does not include prevented vehicles based on the predicted outcome (202).

12. The system (700) of claim 11 further comprising:
an adverse outcome probability module (208) implemented at least partially in the hardware (710) of the computing device (702) to generate, using one or more models, a probability (214) of an adverse outcome occurring during the upcoming trip; and
an outcome predictor (212) implemented at least partially in the hardware (710) of the computing device (702) to generate the predicted outcome (202) based at least in part on the probability (214) of the adverse outcome.

13. The system (700) of claim 11 further comprising:
an outcome severity module (210) implemented at least partially in the hardware (710) of the computing device (702) to generate, using one or more models, a predicted severity (216) of an adverse outcome for the upcoming trip; and
an outcome predictor (212) implemented at least partially in the hardware (710) of the computing device (702) to generate the predicted outcome (202) based at least in part on the predicted severity (216).

14. One or more non-transitory computer-readable storage media (706) having stored instructions that are executable by at least one processor to perform operations comprising:
receiving, by a vehicle access platform (104), a search query (114) from a client device (102) to view vehicles (108) for an upcoming trip;
identifying, by the vehicle access platform (104), information (122) about the upcoming trip, including user information (124), vehicle information (128), and trip information (126);
determining, by the vehicle access platform (104), available vehicles (206) for the upcoming trip based on the information (122) about the upcoming trip;
generating, by the vehicle access platform (104), a predicted outcome (202) resulting from the upcoming trip, the predicted outcome (202) being distinct from a determination of vehicle availability for the upcoming trip and generated based on at least one of the user information, the vehicle information, or the trip information;
based on the predicted outcome (202), identifying, by the vehicle access platform (104), one or more of the available vehicles (206) to prevent from being returned as search results (130); and
controlling, by the vehicle access platform (104), access to the available vehicles (206) for the upcoming trip by returning to the client device (102) filtered search results (130) for a subset of the available vehicles (206) that does not include prevented vehicles based on the predicted outcome (202).

15. The one or more non-transitory computer-readable storage media of claim 14, wherein the predicted outcome (202) resulting from the upcoming trip corresponds to a predicted adverse outcome resulting from the upcoming trip in which access to the available vehicles (206) is not controlled by the vehicle access platform (104).

## Patentansprüche

1. Computerimplementiertes Verfahren, umfassend:
Empfangen, durch eine Fahrzeugzugriffsplattform (104), einer Suchabfrage (114) von einer Clientvorrichtung (102) zum Betrachten von Fahrzeugen (108) für eine bevorstehende Fahrt;
Identifizieren, durch die Fahrzeugzugriffsplattform (104), von Informationen (122) über die bevorstehende Fahrt, einschließlich Benutzerinformationen (124), Fahrzeuginformationen (128) und Fahrtinformationen (126);
Bestimmen, durch die Fahrzeugzugriffsplattform (104), von verfügbaren Fahrzeuge (206) für die bevorstehende Fahrt auf der Basis der Informationen (122) über die bevorstehende Fahrt;
Erzeugen, durch die Fahrzeugzugriffsplattform (104), eines prognostizierten Ergebnisses (202), das aus der bevorstehenden Fahrt resultiert, wobei sich das prognostizierte Ergebnis von einer Bestimmung der Fahrzeugverfügbarkeit für die bevorstehende Fahrt unterscheidet und auf der Basis von mindestens einem der Benutzerinformationen, der Fahrzeuginformationen oder der Fahrtinformationen erzeugt worden ist;
auf der Basis des prognostizierten Ergebnisses (202), Identifizieren, durch die Fahrzeugzugriffsplattform (104), eines oder mehrerer der verfügbaren Fahrzeuge (206), so dass verhindert wird, dass diese(s) als Suchergebnisse (130) zurückgegeben wird/werden; und
Steuern, durch die Fahrzeugzugriffsplattform (104), des Zugriffs auf die verfügbaren Fahrzeuge (206) für die bevorstehende Fahrt durch Zurückgeben von gefilterten Suchergebnissen (130) für einen Teilsatz der verfügbaren Fahrzeuge (206), der keine verhinderten Fahrzeuge auf der Basis des prognostizierten Ergebnisses (202) umfasst, zu der Clientvorrichtung (102).

2. Computerimplementiertes Verfahren nach Anspruch 1, wobei die Suchabfrage (114) über eine Benutzereingabe in eine Benutzerschnittstelle (302) empfangen wird, die an der Clientvorrichtung (102) angezeigt wird.

3. Computerimplementiertes Verfahren nach Anspruch 2, wobei die Benutzereingabe die Fahrtinformationen (126) angibt, die einen Ort der bevorstehenden Fahrt, eine Zeit des Beginns der bevorstehenden Fahrt und eine Zeit des Endes der bevorstehenden Fahrt umfassen.

4. Computerimplementiertes Verfahren nach Anspruch 3, wobei die Benutzerinformationen (124) einen Fahrtverlauf mit der Fahrzeugzugriffsplattform (104) umfassen und wobei das prognostizierte Ergebnis (202) mindestens teilweise auf der Basis des Fahrtverlaufs erzeugt wird.

5. Computerimplementiertes Verfahren nach Anspruch 4, wobei der Fahrtverlauf eine oder mehrere vorhergehende Fahrt(en) mit der Fahrzeugzugriffsplattform (104) angibt.

6. Computerimplementiertes Verfahren nach Anspruch 1, wobei das Erzeugen des prognostizierten Ergebnisses (202) ferner umfasst:
Erzeugen, unter Verwendung von einem oder mehreren Modell(en), einer Wahrscheinlichkeit (214) eines negativen Ergebnisses, das während der bevorstehenden Fahrt auftritt; und wobei das Erzeugen des prognostizierten Ergebnisses (202) mindestens teilweise auf der Wahrscheinlichkeit (214) des negativen Ergebnisses basiert.

7. Computerimplementiertes Verfahren nach Anspruch 1, wobei das Erzeugen des prognostizierten Ergebnisses (202) ferner umfasst:
Erzeugen, unter Verwendung von einem oder mehreren Modell(en), eines prognostizierten Schweregrads (216) eines negativen Ergebnisses für die bevorstehende Fahrt; und wobei das Erzeugen des prognostizierten Ergebnisses (202) mindestens teilweise auf dem prognostizierten Schweregrad (216) basiert.

8. Computerimplementiertes Verfahren nach Anspruch 7, wobei das Erzeugen des prognostizierten Schweregrads (216) das Erzeugen, unter Verwendung von einem oder mehreren Modell(en), von prognostizierten Schadenskosten, die aus der bevorstehenden Fahrt resultieren, umfasst.

9. Computerimplementiertes Verfahren nach Anspruch 7, wobei das Erzeugen des prognostizierten Schweregrads (216) das Erzeugen, unter Verwendung von einem oder mehreren Modell(en), von prognostizierten Nebenkosten, die aus der bevorstehenden Fahrt resultieren, umfasst.

10. Computerimplementiertes Verfahren nach Anspruch 7, wobei das Identifizieren von dem einen oder den mehreren verfügbaren Fahrzeug(en) (206) das Identifizieren mindestens eines Fahrzeugs, das durch die Clientvorrichtung (102) nicht auswählbar ist, auf der Basis dessen umfasst, dass der prognostizierte Schweregrad (216) höher ist als ein im Vorhinein festgelegtes Schweregrad-Schwellenausmaß.

11. System (700), umfassend:
eine Fahrzeugzugriffsplattform (104), die mindestens teilweise in der Hardware (710) einer Rechenvorrichtung (702) implementiert ist, zum Empfangen einer Suchabfrage (114) von einer Clientvorrichtung (102) zum Betrachten von Fahrzeugen (108) für eine bevorstehende Fahrt;
ein Informationsidentifizierungsmodul, das mindestens teilweise in der Hardware (710) der Rechenvorrichtung (702) implementiert ist, zum Identifizieren von Informationen (122) über die bevorstehende Fahrt, einschließlich Benutzerinformationen (124), Fahrzeuginformationen (128) und Fahrtinformationen (126);
eine Fahrzeugverfügbarkeit-Engine (204), die mindestens teilweise in der Hardware (710) der Rechenvorrichtung (702) implementiert ist, zum Bestimmen von verfügbaren Fahrzeugen (206) für die bevorstehende Fahrt auf der Basis der Informationen (122) über die bevorstehende Fahrt;
eine negatives Ergebnis-Prognostizierungsengine (116), die mindestens teilweise in der Hardware (710) der Rechenvorrichtung (702) implementiert ist, zum:
Erzeugen eines prognostizierten Ergebnisses (202), das aus der bevorstehenden Fahrt resultiert, wobei sich das prognostizierte Ergebnis (202) von einer Bestimmung der Fahrzeugverfügbarkeit für die bevorstehende Fahrt unterscheidet und auf der Basis von mindestens einem der Benutzerinformationen, der Fahrzeuginformationen oder der Fahrtinformationen erzeugt worden ist;
und
Identifizieren, auf der Basis des prognostizierten Ergebnisses (202) eines oder mehrerer der verfügbaren Fahrzeuge (206), so dass verhindert wird, dass diese(s) als Suchergebnisse (130) zurückgegeben wird/werden; und
eine Zugriff-Steuerungseinrichtung (118), die mindestens teilweise in der Hardware (710) der Rechenvorrichtung (702) implementiert ist, zum Steuern des Zugriffs auf die verfügbaren Fahrzeuge (206) für die bevorstehende Fahrt durch Zurückgeben von gefilterten Suchergebnissen (130) für einen Teilsatz der verfügbaren Fahrzeuge (206), der keine verhinderten Fahrzeuge auf der Basis des prognostizierten Ergebnisses (202) umfasst, zu der Clientvorrichtung (102).

12. System (700) nach Anspruch 11, ferner umfassend:
ein negatives Ergebnis-Wahrscheinlichkeitsmodul (208), das mindestens teilweise in der Hardware (710) der Rechenvorrichtung (702) implementiert ist, zum Erzeugen, unter Verwendung von einem oder mehreren Modell(en), einer Wahrscheinlichkeit (214) eines negativen Ergebnisses, das während der bevorstehenden Fahrt auftritt; und
eine Ergebnis-Prognostiziereinrichtung (212), die mindestens teilweise in der Hardware (710) der Rechenvorrichtung (702) implementiert ist, zum Erzeugen des prognostizierten Ergebnisses (202) mindestens teilweise auf der Basis der Wahrscheinlichkeit (214) des negativen Ergebnisses.

13. System (700) nach Anspruch 11, ferner umfassend:
ein Ergebnis-Schweregrad-Modul (210), das mindestens teilweise in der Hardware (710) der Rechenvorrichtung (702) implementiert ist, zum Erzeugen, unter Verwendung von einem oder mehreren Modell(en), eines prognostizierten Schweregrads (216) eines negativen Ergebnisses für die bevorstehende Fahrt; und
eine Ergebnis-Prognostiziereinrichtung (212), die mindestens teilweise in der Hardware (710) der Rechenvorrichtung (702) implementiert ist, zum Erzeugen des prognostizierten Ergebnisses (202) mindestens teilweise auf der Basis des prognostizierten Schweregrads (216).

14. Ein oder mehrere nicht-flüchtige(s) computerlesbare(s) Speichermedium/medien (706), auf dem/denen Anweisungen gespeichert sind, die durch mindestens einen Prozessor zum Durchführen von Vorgängen ausführbar sind, umfassend:
Empfangen, durch eine Fahrzeugzugriffsplattform (104), einer Suchabfrage (114) von einer Clientvorrichtung (102) zum Betrachten von Fahrzeugen (108) für eine bevorstehende Fahrt;
Identifizieren, durch die Fahrzeugzugriffsplattform (104), von Informationen (122) über die bevorstehende Fahrt, einschließlich Benutzerinformationen (124), Fahrzeuginformationen (128) und Fahrtinformationen (126);
Bestimmen, durch die Fahrzeugzugriffsplattform (104), von verfügbaren Fahrzeugen (206) für die bevorstehende Fahrt auf der Basis der Informationen (122) über die bevorstehende Fahrt;
Erzeugen, durch die Fahrzeugzugriffsplattform (104), eines prognostizierten Ergebnisses (202), das aus der bevorstehenden Fahrt resultiert, wobei sich das prognostizierte Ergebnis von einer Bestimmung der Fahrzeugverfügbarkeit für die bevorstehende Fahrt unterscheidet und auf der Basis von mindestens einem der Benutzerinformationen, der Fahrzeuginformationen oder der Fahrtinformationen erzeugt worden ist;
auf der Basis des prognostizierten Ergebnisses (202), Identifizieren, durch die Fahrzeugzugriffsplattform (104), eines oder mehrerer der verfügbaren Fahrzeuge (206), so dass verhindert wird, dass diese(s) als Suchergebnisse (130) zurückgegeben wird/werden; und
Steuern, durch die Fahrzeugzugriffsplattform (104), des Zugriffs auf die verfügbaren Fahrzeuge (206) für die bevorstehende Fahrt durch Zurückgeben von gefilterten Suchergebnissen (130) für einen Teilsatz der verfügbaren Fahrzeuge (206), der keine verhinderten Fahrzeuge auf der Basis des prognostizierten Ergebnisses (202) umfasst, zu der Clientvorrichtung (102).

15. Ein oder mehrere nicht-flüchtige(s) computerlesbare(s) Speichermedium/medien nach Anspruch 14, wobei das prognostizierte Ergebnis (202), das aus der bevorstehenden Fahrt resultiert, einem prognostizierten negativen Ergebnis entspricht, das aus der bevorstehenden Fahrt resultiert, bei dem der Zugriff auf die verfügbaren Fahrzeuge (206) nicht durch die Fahrzeugzugriffsplattform (104) gesteuert wird.

## Revendications

1. Procédé mis en œuvre par ordinateur comprenant :
la réception, par une plateforme d'accès à des véhicules (104), d'une interrogation de recherche (114) en provenance d'un dispositif client (102) pour visualiser des véhicules (108) pour un trajet à venir ;
l'identification, par la plateforme d'accès à des véhicules (104), d'informations (122) concernant le trajet à venir, comportant des informations utilisateur (124), des informations de véhicule (128) et des informations de trajet (126) ;
la détermination, par la plateforme d'accès à des véhicules (104), de véhicules disponibles (206) pour le trajet à venir sur la base des informations (122) concernant le trajet à venir ;
la génération, par la plateforme d'accès à des véhicules (104), d'un résultat prédit (202) résultant du trajet à venir, le résultat prédit étant distinct d'une détermination de disponibilité de véhicule pour le trajet à venir et généré sur la base d'au moins l'une parmi les informations utilisateur, les informations de véhicule ou les informations de trajet ;
sur la base du résultat prédit (202), l'identification, par la plateforme d'accès à des véhicules (104), d'un ou plusieurs parmi les véhicules disponibles (206) à empêcher d'être renvoyés en tant que résultats de recherche (130) ; et
la commande, par la plateforme d'accès à des véhicules (104), d'un accès aux véhicules disponibles (206) pour le trajet à venir en renvoyant, au dispositif client (102), des résultats de recherche filtrés (130) pour un sous-ensemble des véhicules disponibles (206) qui ne comporte pas de véhicules écartés sur la base du résultat prédit (202).

2. Procédé mis en œuvre par ordinateur selon la revendication 1, dans lequel l'interrogation de recherche (114) est reçue par l'intermédiaire d'une entrée utilisateur dans une interface utilisateur (302) affichée au niveau du dispositif client (102).

3. Procédé mis en œuvre par ordinateur selon la revendication 2, dans lequel l'entrée utilisateur indique les informations de trajet (126) comportant un emplacement du trajet à venir, une heure de début du trajet à venir et une heure de fin du trajet à venir.

4. Procédé mis en œuvre par ordinateur selon la revendication 3, dans lequel les informations utilisateur (124) comportent un historique de trajets avec la plateforme d'accès à des véhicules (104), et dans lequel le résultat prédit (202) est généré sur la base, au moins en partie, de l'historique de trajets.

5. Procédé mis en œuvre par ordinateur selon la revendication 4, dans lequel l'historique de trajets indique un ou plusieurs trajets précédents avec la plateforme d'accès à des véhicules (104).

6. Procédé mis en œuvre par ordinateur selon la revendication 1, dans lequel la génération du résultat prédit (202) comprend en outre :
la génération, à l'aide d'un ou plusieurs modèles, d'une probabilité (214) qu'un résultat défavorable se produise au cours du trajet à venir ; et dans lequel la génération du résultat prédit (202) est basée, au moins en partie, sur la probabilité (214) du résultat défavorable.

7. Procédé mis en œuvre par ordinateur selon la revendication 1, dans lequel la génération du résultat prédit (202) comprend en outre :
la génération, à l'aide d'un ou plusieurs modèles, d'une gravité prédite (216) d'un résultat défavorable pour le trajet à venir ; et dans lequel la génération du résultat prédit (202) est basée, au moins en partie, sur la gravité prédite (216).

8. Procédé mis en œuvre par ordinateur selon la revendication 7, dans lequel la génération de la gravité prédite (216) comporte la génération, à l'aide d'un ou plusieurs modèles, d'un coût des dommages prédit résultant du trajet à venir.

9. Procédé mis en œuvre par ordinateur selon la revendication 7, dans lequel la génération de la gravité prédite (216) comporte la génération, à l'aide d'un ou plusieurs modèles, d'un coût accessoire prédit résultant du trajet à venir.

10. Procédé mis en œuvre par ordinateur selon la revendication 7, dans lequel l'identification du ou des véhicules disponibles (206) comporte l'identification d'au moins un véhicule pour lequel le dispositif client (102) n'est pas admissible sur la base de la gravité prédite (216) étant supérieure à une quantité de gravité seuil prédéfinie.

11. Système (700) comprenant :
une plateforme d'accès à des véhicules (104) mise en œuvre au moins partiellement dans un matériel (710) d'un dispositif informatique (702) pour recevoir une interrogation de recherche (114) en provenance d'un dispositif client (102) pour visualiser des véhicules (108) pour un trajet à venir ;
un module d'identification d'informations mis en œuvre au moins partiellement dans le matériel (710) du dispositif informatique (702) pour identifier des informations (122) concernant le trajet à venir, comportant des informations utilisateur (124), des informations de véhicule (128) et des informations de trajet (126) ;
un moteur de disponibilité de véhicule (204) mis en œuvre au moins partiellement dans le matériel (710) du dispositif informatique (702) pour déterminer des véhicules disponibles (206) pour le trajet à venir sur la base des informations (122) concernant le trajet à venir ;
un moteur de prédiction de résultat défavorable (116) mis en œuvre au moins partiellement dans le matériel (710) du dispositif informatique (702) pour :
générer un résultat prédit (202) résultant du trajet à venir, dans lequel le résultat prédit (202) est distinct d'une détermination de disponibilité de véhicule pour le trajet à venir et généré sur la base d'au moins l'une parmi les informations utilisateur, les informations de véhicule ou les informations de trajet ; et
identifier, sur la base du résultat prédit (202), un ou plusieurs parmi les véhicules disponibles (206) à empêcher d'être renvoyés en tant que résultats de recherche (130) ; et
un dispositif de commande d'accès (118) mis en œuvre au moins partiellement dans le matériel (710) du dispositif informatique (702) pour commander un accès aux véhicules disponibles (206) pour le trajet à venir en renvoyant, au dispositif client (102), des résultats de recherche filtrés (130) pour un sous-ensemble de véhicules disponibles (206) qui ne comporte pas de véhicules écartés sur la base du résultat prédit (202).

12. Système (700) selon la revendication 11, comprenant en outre :
un module de probabilité de résultat défavorable (208) mis en œuvre au moins partiellement dans le matériel (710) du dispositif informatique (702) pour générer, à l'aide d'un ou plusieurs modèles, une probabilité (214) qu'un résultat défavorable se produise au cours du trajet à venir ; et
un prédicteur de résultat (212) mis en œuvre au moins partiellement dans le matériel (710) du dispositif informatique (702) pour générer le résultat prédit (202) sur la base, au moins en partie, de la probabilité (214) du résultat défavorable.

13. Système (700) selon la revendication 11, comprenant en outre :
un module de gravité de résultat (210) mis en œuvre au moins partiellement dans le matériel (710) du dispositif informatique (702) pour générer, à l'aide d'un ou plusieurs modèles, une gravité prédite (216) d'un résultat défavorable pour le trajet à venir ; et
un prédicteur de résultat (212) mis en œuvre au moins partiellement dans le matériel (710) du dispositif informatique (702) pour générer le résultat prédit (202) sur la base, au moins en partie, de la gravité prédite (216).

14. Un ou plusieurs supports de stockage non transitoires lisibles par ordinateur (706) ayant des instructions stockées qui sont exécutables par au moins un processeur pour réaliser des opérations comprenant :
la réception, par une plateforme d'accès à des véhicules (104), d'une interrogation de recherche (114) en provenance d'un dispositif client (102) pour visualiser des véhicules (108) pour un trajet à venir ;
l'identification, par la plateforme d'accès à des véhicules (104), d'informations (122) concernant le trajet à venir, comportant des informations utilisateur (124), des informations de véhicule (128) et des informations de trajet (126) ;
la détermination, par la plateforme d'accès à des véhicules (104), de véhicules disponibles (206) pour le trajet à venir sur la base des informations (122) concernant le trajet à venir ;
la génération, par la plateforme d'accès à des véhicules (104), d'un résultat prédit (202) résultant du trajet à venir, le résultat prédit (202) étant distinct d'une détermination de disponibilité de véhicule pour le trajet à venir et généré sur la base d'au moins l'une parmi les informations utilisateur, les informations de véhicule ou les informations de trajet ;
sur la base du résultat prédit (202), l'identification, par la plateforme d'accès à des véhicules (104), d'un ou plusieurs parmi les véhicules disponibles (206) à empêcher d'être renvoyés en tant que résultats de recherche (130) ; et
la commande, par la plateforme d'accès à des véhicules (104), d'un accès aux véhicules disponibles (206) pour le trajet à venir en renvoyant, au dispositif client (102), des résultats de recherche filtrés (130) pour un sous-ensemble des véhicules disponibles (206) qui ne comporte pas de véhicules écartés sur la base du résultat prédit (202).

15. Un ou plusieurs supports de stockage non transitoires lisibles par ordinateur selon la revendication 14, dans lequel le résultat prédit (202) résultant du trajet à venir correspond à un résultat défavorable prédit résultant du trajet à venir dans lequel un accès aux véhicules disponibles (206) n'est pas commandé par la plateforme d'accès aux véhicules (104).
